# EUROPÄISCHE PATENTSCHRIFT

(11) **EP 1 667 812 B1**
(45) Veröffentlichungstag und Bekanntmachung des Hinweises auf die Patenterteilung: **21.05.2008**
(21) Anmeldenummer: 04765572.5
(22) Anmeldetag: 24.09.2004
(51) Int. Cl.: B23K 26/36

(54) **VERFAHREN ZUR BEARBEITUNG EINER DREIDIMENSIONALEN OBERFLÄCHE**
METHOD FOR MACHINING A THREE-DIMENSIONAL SURFACE
PROCEDE D'USINAGE D'UNE SURFACE TRIDIMENSIONNELLE

(30) Priorität: 26.09.2003 DE 10345081
(43) Veröffentlichungstag der Anmeldung: 14.06.2006
(73) Patentinhaber: PEGUFORM GMBH, 79268 Bötzingen (DE)
(72) Erfinder: HESS, Raul, 79183 Waldkirch (DE)
(74) Vertreter: Neunert, Peter Andreas
(86) Internationale Anmeldenummer: PCT/EP2004/010724
(87) Internationale Veröffentlichungsnummer: WO 2005/030431

(56) Entgegenhaltungen:
- DE-A- 10 116 672
- US-B1- 6 337 749

## Beschreibung

Der schichtweise Abtrag einer Materialschicht von einer Form zur Herstellung einer beliebigen dreidimensionalen Oberflächenstruktur erfolgte bisher mittels Ätzverfahren oder galvanischen Verfahren, bei welchen eine Positivform mit der gewünschten Oberflächengestaltung mit einem Metall überzogen worden ist, welches dann eine Negativform zur Herstellung des gewünschten Formteils oder der Folie ergibt. Diese Verfahrensvarianten erfordern immer eine große Anzahl von Verfahrensschritten, um eine Negativform für nur eine einzige Oberflächengestaltung zu erhalten. Dies hat zur Folge, dass bei jeder Änderung der Oberflächengestaltung dieselben Verfahrensschritte erneut anfallen, was zusätzliche Kosten und nicht unbeträchtlichen Zeitaufwand bedeutet, um Oberflächenstrukturen mit einer derartigen Präzision abzubilden, wie sie z.B. zur naturgetreuen Darstellung einer Oberflächenstruktur, wie einer Ledemarbe erforderlich sind. Bislang sind vor allem zwei Verfahren verbreitet, um Werkzeuge wirtschaftlich zu narben, zum einen ist das die Ätznarbe, bei der die Oberfläche des Werkstücks unterschiedlich maskiert wird und dann durch eine Ätzflüssigkeit selektiv abgetragen wird. Dieses Verfahren kann mit Einschränkungen auch schichtweise angewendet werden und erzeugt dann allerdings einen stark abgestuften Übergang zwischen Narbgipfeln und Narbtälem. Außerdem gibt es Schwierigkeiten bei komplizierten Geometrien der zu narbenden Fläche.

Ein anderes Verfahren ist das sogenannte Galvano-Verfahren. Hierbei wird ein Positivmodell, das sogenannte Belederungsmodell mit einer Folie (oder Leder) bezogen, welche die gewünschte Struktur, beispielsweise Ledemarbe aufweist. In einem Abformverfahren wird dann die Narbe in ein Negativwerkzeug übernommen, das wiederum zur Herstellung eines (Positiv-) Badmodells verwendet wird. Auf dieses wird dann in einem Bad galvanisch eine Metallschicht aufgebracht. Das so erhaltene Galvanowerkzeug muss dann noch verstärkt werden, kann dann aber auch nur für bestimmte Verfahren zur Teileherstellung zur Anwendung kommen, die seine Oberfläche nicht zu stark beanspruchen. Verbreitet sind vor allem das Slush-Verfahren und das Sprühhaut-Verfahren. Außerdem ist jedes dieser letztgenannten Verfahren sehr zeit- und kostenaufwendig.

Aufgrund des großen Aufwandes, welcher mit den aus dem Stand der Technik vorbekannten und in industriellem Maßstab zum Einsatz kommenden Verfahren verbunden ist, gibt es Ansätze, die Oberflächenstruktur mit einem Abtragmittel herzustellen. Ein vielseitig verwendbares Abtragmittel ist ein Laserstrahl. Die Technologie der Abtragung von Material mittels Laser ist beispielsweise aus DE3939866 A1 aus dem Bereich der Lasergravur bekannt. Die Materialabtragung durch Verdampfen einer Oberflächenschicht mittels Laser ist aus DE4209933 C2 bekannt. Der Laserstrahl wird aufgeweitet und durch drehbare Ablenkspiegel über eine von einem Rechner vorgegebene Bezugslinie geführt. Die Bezugslinien bilden ein Rasterfeld. Das Rasterfeld wird mehrmals vom Laserstrahl entlang winkelversetzter Bezugslinien abgefahren, wobei Material durch Verdampfung abgetragen wird. Durch die Variation der Richtung der Laserspuren durch Drehung in der Bearbeitungsebene um einen bestimmten Winkel werden systematische Überhöhungen in der Grenzschicht vermieden. Dadurch entsteht eine netzartige Struktur der Rasterlinien. Diese Technologie findet ausschließlich auf zweidimensionale Oberflächen Anwendung. Mittels der in der Patentschrift offenbarten Technologie wird ein gleichmäßiger Abtrag von Material im Rasterfeld erzielt.

Eine zeilenweise Führung des Lasers in Bahnen (Rasterlinien), bzw. Spuren, im jeweiligen Bearbeitungsfeld des Lasers wird in DE10032981 A1 offenbart. Die Spuren werden bereichsweise auf ein sich bewegendes Werkstück aufgebracht. Um zu vermeiden, dass sich im Überlappungsbereich der Spuren an den Bereichsgrenzen eine scharfe Trennlinie ausbildet, die durch übermäßigen Materialabtrag im Überlappungsbereich entsteht, werden die Bereichsgrenzen bei jedem Abtrag versetzt. Mit anderen Worten, bei zeilenförmigem Abtrag eines Bereichs setzt der Laser am Rand nicht längs einer Linie ab, sondern fährt in die Nähe dieser Linie. Der Endpunkt der Abtragung liegt dann zwar in einem Abstandsbereich dieser Linie, dieser Abstandsbereich ist aber von Zeile zu Zeile verschieden. Da die Endpunkte sich somit statistisch um den Mittelwert der Linie verteilen, kann kein optischer Defekt wahrgenommen werden. Dieses Verfahren eignet sich zum Abtrag von Rasterfeldem, welche auf einer Ebene liegen. Sobald die Rasterfelder aber eine Neigung gegeneinander aufweisen, wird durch das Abtragmittel eine andere Materialmenge abgetragen, wenn sich das Abtragmittel aus dem Rasterfeld entfernt. Somit müsste jeder einzelne Endpunkt aufgezeichnet werden, der Materialabtrag bestimmt, und der für das benachbarte Rasterfeld vorgesehene Materialabtrag um den Fehlbetrag korrigiert werden. Aus diesem Grund ist das Verfahren für dreidimensionale Oberflächen nur unter hohem zusätzlichen Rechenaufwand anwendbar.

Nach der Lehre der DE10116672 A1 werden Grob- und Feinstrukturen unterschiedlich bearbeitet, wobei Feinbereiche mittels Laser und Grobbereiche mittels einer Aushebvorrichtung bearbeitet werden. Diese Technologie eignet sich insbesondere für Bearbeitung von Metalloberflächen, welche beispielsweise auf Druckzylindern angeordnet sind. Die Grobbearbeitung erfolgt mittels mechanischer Abtragvorrichtungen.

Bekanntermaßen lassen sich beispielsweise durch die Materialabtragung mittels Laser auch komplizierte Strukturen herstellen, dies wird beispielsweise bei der Mikrobearbeitung von Materialien ausgenutzt. Es gibt auch bereits Verfahren, um großflächig Material mit dem Laser abzutragen.

Es ist eine Aufgabe der Erfindung, eine beliebige Oberflächenstruktur, wie beispielsweise eine Ledemarbe, von beliebig gestalteten dreidimensionalen Oberflächen abzutragen. Die Aufgabe der Erfindung besteht somit darin, ein Verfahren zu entwickeln, welches die Möglichkeit bietet, beliebig geformte Werkzeuge und Modelle mit einer dreidimensionalen Oberflächenstruktur zu versehen, die einer natürlichen oder beliebig anderen Oberflächenstruktur möglichst nahe kommt. Eine derartige Oberflächenstruktur ist beispielsweise die Narbe des Leders, die dadurch gekennzeichnet ist, dass Narbgipfel unterschiedliche Höhen und Ausdehnungen aufweisen und der Übergang zwischen Narbgipfeln und Narbtälern gleichmäßig verläuft. Es ist eine weitere Aufgabe der Erfindung, Trenn- oder Grenzlinien beim Materialabtrag zu vermeiden.

Diese Aufgabe wird durch das Verfahren gemäß Anspruch 1 gelöst, das für verschiedene Arten von Materialien Verwendung finden kann, im Vergleich einem der aus dem Stand der Technik bekannten Verfahren schnell durchführbar ist, und keine oder wenig Einschränkungen in Bezug auf die abzubildenden Geometrien der Oberflächenstruktur verursacht. Zudem soll das erfindungsgemäße Verfahren Anwendung auf beliebige Materialkombinationen finden. Eine ein- oder mehrschichtige Materialabtragung einer beliebig geformten dreidimensionalen Oberfläche erfolgt mittels eines punktförmig auf eine Oberfläche wirkenden Abtragmittels, wie eines Lasers, bei welchem eine Oberflächenstruktur auf der dreidimensionalen Oberfläche erzeugt wird, wobei die Oberfläche durch mindestens ein Polygonnetz angenähert wird, wobei jedes Polygon des Polygonnetzes dem Bearbeitungsbereich des Lasers zugeordnet ist. Die durch das Polygonnetz angenäherte Oberfläche wird mittels einer Scanvorrichtung gescannt. Die Scanvorrichtung, z.B. ein Galvanoscanner, definiert den Bearbeitungsbereich des Lasers.

Das ursprüngliche dreidimensionale Computermodell oder Urmodell des Werkstücks wird durch ein ausreichend engmaschiges Polygonnetz beschrieben, das wiederum aus der CAD-(Spline)-Beschreibung des Werkstückes abgeleitet wird.

Den dreidimensionalen Ecken der Polygone entsprechen zweidimensionale Punkte in einer oder mehrerer Ur-Texturbitmaps, wodurch die Polygone in den zweidimensionalen Raum der Bitmap übertragen werden. Der Graustufenwert der Bitmap entspricht der erforderlichen Oberflächenabtragung am Werkstück.

Anschließend werden Bearbeitungsflächen für die einzelnen Schichten definiert. Die Graustufenbitmaps für die Polygone der einzelnen Schichten ergeben sich aus einer Parallelprojektion der Polygone und Bitmaps des Urmodells auf das Polygon der Bearbeitungsfläche. Die Oberflächenstruktur wird somit durch mindestens ein Rasterbild beschrieben, wobei der jeweils zu bearbeitende Bearbeitungsbereich der Oberfläche vollkommen in den Fokusbereich des Lasers zu liegen kommt. Die Punktlage der Polygonecken im dreidimensionalen Raum entspricht einer zweidimensionalen Koordinatenlage auf der Fläche der Rasterbilder. Die Materialabtragung kann in mehreren Schichten erfolgen, wobei jeder Schicht ein eigenes Polygonnetz zugeordnet ist. Das jeweils zu bearbeitende Teilstück jeder Schicht hat in einer vorteilhaften Ausgestaltung keinen Randabschnitt mit einem der vorher bearbeiteten Teilstücke einer anderen Schicht gemeinsam.

Das Verfahren für den schichtweisen selektiven Formabtrag an einem Werkstück bezweckt die Einbringung einer Struktur, beispielsweise in der Form einer Ledemarbe in das Werkstück, die dadurch gekennzeichnet ist, dass die Übergänge zwischen Narbgipfeln und Narbtälem möglichst gleichmäßig verlaufen. Des weiteren sollen bezüglich der Topologie des Werkstückes möglichst wenig Einschränkungen notwendig sein, d.h. es erfolgt hier keine Beschränkung auf z.B. Zylinderflächen wie im Stand der Technik, siehe z.B. DE 101 16 672 A1.

Gemäß DE 4209933 C2 erfolgt die Einbringung der Struktur beispielsweise durch das Verdampfen des Materials mittels eines Laserstrahles. Dieser wird rechnergesteuert entlang vorgegebener Rasterlinien über das Werkstück geführt. Bei großen Flächen geschieht die Bearbeitung im allgemeinen abschnittsweise (vgl. auch DE 10032981 A1).

Beliebige Oberflächen und Narben müssen derart dargestellt werden, dass sie mit einem bekannten Verfahren zur Abtragung von Material, insbesondere einem Laserverfahren, hergestellt werden können. Hierbei muss man zwischen der Beschreibung der Topologie, d.h. der Geometrie des Werkstücks und der Narbe unterscheiden, das heißt, der gewünschten Feinstrukturierung der Oberfläche, welche mit dem Werkstück durch ein formgebendes Verfahren erzeugt wird.

In der Automobilindustrie werden zur Topologie-Beschreibung von sogenannten Freiformflächen im allgemeinen NURBS (non-uniform rational B-Splines) eingesetzt. Da man mit einer einzigen NURBS-Fläche eine komplexe Geometrie nicht zufriedenstellend beschreiben kann, werden mehrere sogenannte NURBS-Patches aneinandergesetzt. Oftmals werden diese vor dem Zusammensetzen auch noch beschnitten (getrimmt), wozu auf den NURBS-Flächen liegende NURBS-Kurven eingesetzt werden.

Um diese Topologie mit dem Laser bearbeiten zu können, muss sie in Bearbeitungsbereiche aufgeteilt werden. Die Größe des Bearbeitungsbereichs wird Idealerweise so gewählt, dass er bei entsprechender Stellung des Scanners (möglichst näherungsweise senkrecht auf dem Bearbeitungsbereich) lediglich durch Einflussnahme auf die Galvanospiegel abgescannt werden kann. Des weiteren sollte die Entfernungsänderung zwischen Scanner und Bearbeitungsbereich gering gehalten werden. Ziel muss bei der Wahl der Größe des Bearbeitungsbereichs in jedem Falle sein, dass weder durch die Winkelstellung des Lasers, noch durch die Veränderung des Abstandes zwischen der Fläche und dem Scanner eine unerwünschte Änderung der Stärke des Materialabtrages beziehungsweise des pro Zeiteinheit abgetragenen Materials erfolgt. Bei jedem Bearbeitungsbereich ist zu beachten, dass er als ganzes im Fokus des Lasers zu liegen kommt.

Den möglichen Bearbeitungsbereich bei einer bestimmten Position des Scanners kann man bei Einsatz einer Planfeldlinse durch den Fokus-Quader beschreiben. Der Abstand zwischen Scanner und der Mittelebene des Quaders ist durch die Brennweite der Laseroptik gegeben. Die Höhe des Bearbeitungsbereichs, bei vorgegebenem maximalen Fehler der abgetragenen Schichtdicke, ist durch die maximale Fokustiefe (= Abweichung von der Brennweite) gegeben und seine Seitenlänge durch die entsprechende maximale Auslenkung der Galvanospiegel im Scanner. Innerhalb des Fokus-Quaders kann der Bearbeitungsabschnitt durch ein Polygon angenähert werden, dessen Ecken alle auf einer Fläche liegen, die idealerweise exakt den Abstand der Brennweite zu der Laseroptik hat und senkrecht zur Richtung des Laserstrahles in der Mittelstellung der Ablenkspiegel steht. Diesem Polygon entspricht nun ein Flächenabschnitt der zu bearbeitenden Fläche, der durch Projektion des Polygons auf die NURBS-Fläche entsteht und vollkommen im Focus-Quader liegen muss.

Die gesamte Topologie der zu bearbeitenden Fläche wird somit durch ein Gitternetz von zusammenhängenden Polygonen verschiedener Größe und Form beschrieben. Dabei sind die Polygonkanten unabhängig von den Rändern der die zu bearbeitende Fläche beschreibenden NURBS-Patches zu wählen, d.h. es kann und wird vorkommen, dass ein oder mehrere Punkte des Polygons auf einem Patch liegen und ein oder mehrere Punkte des Polygons auf dem angrenzenden NURBS-Patch.

Für die Beschreibung der Feinstruktur der Oberfläche wird jedem Polygon zwecks der besseren Verarbeitbarkeit durch das Steuerprogramm des Lasers ein Rasterbild (Bitmap) zugeordnet. Hierbei entspricht die Größe des Bildpunktes minimal der Größe des Durchmessers des Laser-Lichtpunkts und die Graustufe (Helligkeit) oder die Farbstufe (Intensität) des Bildpunktes der Tiefe der Struktur an diesem Punkt. Ein weißer Punkt würde zum Beispiel bedeuten, das überhaupt kein Material abgetragen wird, während ein schwarzer Punkt maximalen Materialabtrag bedeuten würde (oder umgekehrt).

Eine noch höhere Genauigkeit kann durch eine Beschreibung des Laserpunktes durch mehrere Bildpunkte in der Bitmap erreicht werden. Der Nachteil besteht in der Vergrößerung der Bitmap und der entsprechend höhere Speicherbedarf und Rechenaufwand in der Steuerelektronik.

Die Codierung der Bitmap entspricht hierbei der maximalen Schichtenzahl, das heißt bei 256 Graustufen (= 8 bit) je Bildpunkt können maximal 256 Schichten dargestellt werden. Zur Abspeicherung dieses Rasterbildes sind verschiedene Computerformate mit entsprechenden Komprimierungsalgorithmen bekannt, die eine sehr starke Verringerung des Speicherbedarfes zur Folge haben.

Im allgemeinen Fall wird das Polygon selten eine quadratische Form haben. Daher erfolgt eine Zuordnung der Eckpunkte des Polygons im dreidimensionalen Raum zu jeweils einem entsprechenden Punkt auf der Bitmap in 2D-Koordinaten (Texturkoordinaten). Es ist bei entsprechender Anordnung der Polygone auch möglich, die Texturkoordinaten mehrerer Polygone auf einer Bitmap zusammenzufassen. Außerdem kann beim Errechnen und Abspeichern der Polygone und zugehörigen Bitmaps auch schon eine Winkelrichtung für die Laserspuren (vgl. DE 42 09 933 C2) vorgegeben werden. Die Laserspuren brauchen den Rasterlinien der Bitmap nicht unbedingt zu folgen, sondern es können Verfahren der Computergrafik zum Einsatz kommen, die für eine schräg zu den Rasterlinien verlaufende Laserspur die Helligkeitswerte errechnen, unter Verwendung von Antialiasing-Algorithmen. (vergleiche eine diagonal auf einem Computerbildschirm verlaufende Linie).

Bei der Bearbeitung des Werkstückes muss ein Lasergerät zum Einsatz kommen, bei dem der Scanner, in dem sich die Galvanospiegel befinden, in Bezug auf das Werkstück eine ausreichende Beweglichkeit aufweist, um eine Position anfahren zu können, die sich möglichst senkrecht relativ zu jedem Polygon im Abstand der Brennweite der Laseroptik befindet, d.h. die derjenigen Position entspricht, die bei der Berechnung der Polygone zugrunde gelegt wurde.

Für die Steuerung des Lasergerätes im Sinne einer wirtschaftlichen Bearbeitung ist es vonnöten, die Polygone im Datensatz so zu ordnen, dass sie von der Steuerelektronik in einer Reihenfolge eingelesen werden, die möglichst geringe Verfahrwege des Scanners zur Folge hat.

Eine weitere Aufgabe besteht in der Vermeidung von Trennlinien, die in dem Bereich entstehen, in dem eine Laserspur endet und die nächste beginnt (vgl. DE10032981 A1). Die Gefahr besteht insbesondere an den Kanten, an denen zwei Polygone aneinander stoßen.

Diese Aufgabe wird dadurch gelöst, dass die Schichtdicke so stark herabgesetzt wird, dass die entstehende Grenzlinie in der Höhe vernachlässigbar klein im Vergleich zu der Gesamthöhe der Narbe und somit nicht mehr sichtbar ist. Die Addition des Trennlinien-Fehlers an den Polygonkanten wird dadurch vermieden, dass jeder abzutragenden Schicht ein eigenes unabhängiges 3-dimensionales Polygonnetz zugeordnet wird. Dieses kann völlig frei gewählt werden, unter Beachtung der oben genannten Vorgaben. Außerdem muss beachtet werden, dass sich Polygonränder zwar überschneiden (das ist unvermeidlich), aber keinesfalls übereinander liegen dürfen. Ansonsten addiert sich der Trennlinien-Fehler. Das bedeutet, bei Betrachtung eines beliebigen Punktes auf der zu bearbeitenden Fläche des Werkstückes und einem Materialabtrag in n Schichten, dass dieser Punkt zu n verschiedenen Polygonen aus n verschiedenen Polygonnetzen "gehört".

Diese Polygone können sich entweder eine Textur-Bitmap teilen, oder aber sie verteilen sich auf mehr als eine bis maximal n Bitmaps.

Bezüglich der zugehörigen Textur-Bitmaps muss beachtet werden, dass beim Vorhandensein von mehreren Bitmaps sich der entsprechende Schichtabtrag auf die einzelnen Bitmaps verteilt. Das heißt, der endgültige Materialabtrag an einem bestimmten Punkt ergibt sich aus einer Addition der einzelnen Grauwerte der Texturbitmaps an diesem Punkt.

Ist der Trennlinienfehler noch stärker zu reduzieren, kann ein Verfahren nach DE10032981A zur Anwendung kommen, bei dem ein Überlappungsbereich zwischen den Bearbeitungsabschnitten gebildet wird, in dem die Bearbeitungsspuren des Lasers in den Anschnitten ineinander greifen, und die Übergangspunkte statistisch verteilt sind.

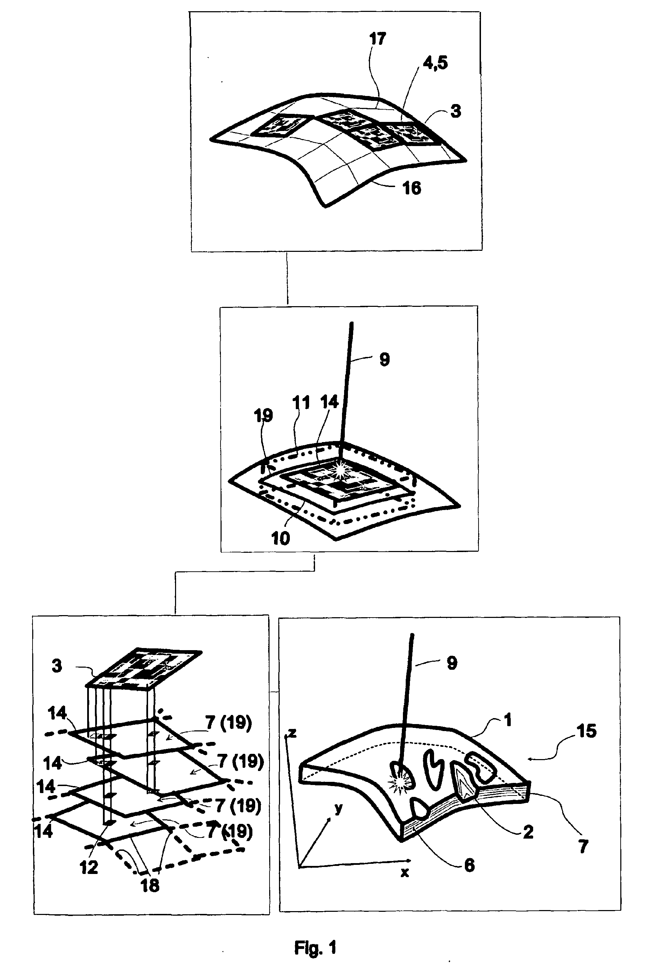

Fig. 1 Schematische Darstellung des Verfahrenablaufs

In der einzigen Figur ist der Ablauf des Verfahrens schematisch dargestellt. Das Verfahren zur mehrschichtigen Materialabtragung von einem Werkstück (15) mit einer beliebig geformten dreidimensionalen Oberfläche (1) erfolgt mittels eines punktförmig auf eine Oberfläche wirkenden Abtragmittels (9), wie eines Lasers, mittels welchem eine Oberflächenstruktur (2) auf der dreidimensionalen Oberfläche (1) erzeugt wird. Auf der Oberfläche (1) werden Bearbeitungsbereiche (10) definiert, wobei ein derartiger Bearbeitungsbereich (10) durch den Fokusbereich (11) des Abtragmittels bestimmt ist. Die Oberfläche (1) wird durch übereinander liegende Polygonnetze (18) angenähert, wobei jedes Polygon (19) des Polygonnetzes (18) dem Bearbeitungsbereich (10) des Abtragmittels (9) zugeordnet ist.

Die Oberflächenstruktur (2) wird durch mindestens eine Graustufenbitmap (14) beschrieben. Die Graustufenbitmap (14) umfasst Bildpunkte unterschiedlicher Graustufen (12) oder unterschiedlicher Farbstufen. Die jedem Bildpunkt der Graustufenbitmap (14) entsprechende Helligkeit der Graustufe (12) oder die Intensität der Farbstufe oder der Kennwert der Farbe, wie beispielsweise eine Wellenlänge bei Verwendung mehrfarbiger Bitmaps, bestimmt die Tiefe des Materialabtrags.

Der Materialabtrag erfolgt in der Anzahl Schichten (7), welche dem Wert der Graustufe (12) entsprechen. Jeder Schicht (7) ist ein eigenes Polygonnetz (18) zugeordnet. Das jeweils zu bearbeitende Polygon (19) jeder Schicht (7) hat keinen Randabschnitt mit einem der vorher bearbeiteten Polygone gemeinsam, womit sich Randeffekte vermeiden lassen, welche durch Ansetzen und Absetzen des Abtragmittels auf der Oberfläche sichtbar werden können.

Zur Durchführung des Verfahrens wird ein ursprüngliches dreidimensionales Computermodell (16) des Werkstücks (15) erzeugt, welches durch ein ursprüngliches Polygonnetz (17) beschrieben wird. Den dreidimensionalen Ecken der Polygone des ursprünglichen Polygonnetzes (17) entsprechen zweidimensionale Punkte in einer oder mehrerer Ur-Texturbitmaps (3). Die Polygone werden in den zweidimensionalen Raum der Ur-Texturbitmaps (3) übertragen, wobei der Graustufenwert (5) eines Bildpunktes (4) der Ur-Texturbitmap (3) der erforderlichen Materialabtragung am Werkstück (15) entspricht und die Bearbeitungsbereiche (10) einzelne Schichten (7) umfassen. Die Summe der Bearbeitungsbereiche (10) ergeben die Oberfläche (1) und die Summe der Schichten (7) ergibt die Oberflächenstruktur (2) des Werkstücks (15). Jede Schicht (7) ist durch ein Polygonnetz (18) beschreibbar, wobei übereinander liegende Polygonnetze versetzt zueinander angeordnet sind. Die Oberflächenstruktur (2) des Werkstücks (15) wird durch übereinander liegende, zueinander versetzt angeordnete, Polygon netze (18) angenähert. Jedem Polygon (19) des Polygonnetzes (18) wird innerhalb des Bearbeitungsbereichs (10) eine Graustufenbitmap (14) aus einer Parallelprojektion der Ur-Texturbitmap (3) auf das Polygon (19) innerhalb des Bearbeitungsbereichs (10) zugeordnet, sodass der Materialabtrag durch das Abtragmittel (9) in jeder Schicht (7) entsprechend der Werte der Graustufenbitmaps (14) vorgenommen werden kann. Der Abstandswert (6) zwischen zwei Schichten (7) entspricht somit der Helligkeitsdifferenz zwischen zwei benachbarten Graustufen (12)

Das Urmodell wird aus der Beschreibung des Werkstückes durch CAD-(Spline)-Flächen abgeleitet, welche das ursprüngliche Polygonnetz (17) ergeben.

Die Helligkeitswerte der Graustufen (12) der Graustufenbitmaps (14) werden vor oder während der Bearbeitung der Oberfläche (1) des Werkstücks (15) auf die UrTexturbitmap (3) zurückgerechnet. Anstelle von Helligkeitswerten von Graustufen (12) können auch Farbstufen oder Farben aus dem Farbspektrum verwendet werden.

Bezugszeichenliste
1. Oberfläche
2. Textur = Oberflächenstruktur
3. Teilfläche =Urtexturbitmap
4. Bildpunkt
5. Graustufe
6. Abstandswert
7. Schicht
8. frei
9. Abtragmittel
10. Bearbeitungsbereich
11. Fokusbereich
12. Graustufe
13. frei
14. Rasterbild = Graustufenbitmap
15. Werkstück
16. Ursprüngliches 3d Computermodell
17. Ursprüngliches Polygonnetz
18. Polygon netz einer Schicht
19. Polygon des Polygon netzes 18

## Patentansprüche

1. Verfahren zur mehrschichtigen Materialabtragung von einem Werkstück (15) mit einer beliebig geformten dreidimensionalen Oberfläche (1) mittels eines punktförmig auf eine Oberfläche wirkenden Abtragmittels (9), wie eines Lasers, mittels welchem eine Oberflächenstruktur (2) auf der dreidimensionalen Oberfläche (1) erzeugt wird, wobei auf der Oberfläche (1) Bearbeitungsbereiche (10) definiert werden und ein derartiger Bearbeitungsbereich (10) durch den Fokusbereich (11) des Abtragmittels bestimmt ist, **dadurch gekennzeichnet, dass** die Oberfläche (1) durch übereinander liegende Polygon netze (18) angenähert wird, wobei jedes Polygon (19) des Polygonnetzes (18) dem Bearbeitungsbereich (10) des Abtragmittels (9) zugeordnet ist.

2. Verfahren nach Anspruch 1, **gekennzeichnet dadurch, dass** die Oberflächenstruktur (2) durch mindestens eine Graustufenbitmap (14) beschrieben wird.

3. Verfahren nach Anspruch 2, **gekennzeichnet dadurch, dass** die Graustufenbitmap (14) Bildpunkte unterschiedlicher Graustufen (12) oder unterschiedlicher Farbstufen umfasst.

4. Verfahren nach Anspruch 3, **gekennzeichnet dadurch, dass** die jedem Bildpunkt der Graustufenbitmap (14) entsprechende Helligkeit der Graustufe (12) oder die Intensität der Farbstufe die Tiefe des Materialabtrags bestimmt.

5. Verfahren nach Anspruch 4, **gekennzeichnet dadurch, dass** der Materialabtrag in der Anzahl Schichten (7) erfolgt, welche dem Wert der Graustufe (12) entsprechen.

6. Verfahren nach Anspruch 1, **gekennzeichnet dadurch, dass** jeder Schicht (7) ein eigenes Polygonnetz (18) zugeordnet ist.

7. Verfahren nach Anspruch 6, **gekennzeichnet dadurch, dass** das jeweils zu bearbeitende Polygon (19) jeder Schicht (7) keinen Randabschnitt mit einem der vorher bearbeiteten Polygone gemeinsam hat.

8. Verfahren zur mehrschichtigen Materialabtragung von einer beliebig geformten dreidimensionalen Oberfläche nach Anspruch 1, wobei ein ursprüngliches dreidimensionales Computermodell (16) des Werkstücks (15) erzeugt wird, welches durch ein ursprüngliches Polygonnetz (17) beschrieben wird, wobei den dreidimensionalen Ecken der Polygone des ursprünglichen Polygonnetzes (17) zweidimensionale Punkte in einer oder mehrerer Ur-Texturbitmaps (3) entsprechen, wobei die Polygone in den zweidimensionalen Raum der Ur-Texturbitmaps (3) übertragen werden, wobei der Graustufenwert (5) eines Bildpunktes (4) der UrTexturbitmap (3) der erforderlichen Materialabtragung am Werkstück (15) entspricht und die Bearbeitungsbereiche (10) einzelne Schichten (7) umfassen, wobei die Summe der Bearbeitungsbereiche (10) die Oberfläche (1) und die Summe der Schichten (7) die Oberflächenstruktur (2) des Werkstücks (15) ergeben, und jede Schicht (7) durch ein Polygonnetz (18) beschreibbar ist, und die Oberflächenstruktur (2) des Werkstücks (15) durch übereinander liegende, zueinander versetzt angeordnete, Polygonnetze (18) angenähert wird, wobei jedem Polygon (19) des Polygonnetzes (18) innerhalb des Bearbeitungsbereichs (10) eine Graustufenbitmap (14) aus einer Parallelprojektion der Ur-Texturbitmap (3) auf das Polygon (19) innerhalb des Bearbeitungsbereichs (10) zugeordnet wird, sodass der Materialabtrag durch das Abtragmittel (9) in jeder Schicht (7) entsprechend der Werte der Graustufenbitmaps (14) vorgenommen werden kann.

9. Verfahren nach Anspruch 8, **gekennzeichnet dadurch, dass** das Urmodell aus der Beschreibung des Werkstückes durch CAD-(Spline)-Flächen abgeleitet wird, welche das ursprüngliche Polygonnetz (17) ergeben.

10. Verfahren nach Anspruch 8, **gekennzeichnet dadurch, dass** die Helligkeitswerte der Graustufen (12) der Graustufenbitmaps (14) vor oder während der Bearbeitung der Oberfläche (1) des Werkstücks (15) auf die Ur-Texturbitmap (3) zurückgerechnet werden.

## Claims

1. A process for the multi-layered removal of material from a workpiece (15) having an arbitrarily shaped three-dimensional surface (1) by means of a removal agent (9), such as a laser, acting on points a surface, by means of which a surface structure (2) is produced on the three-dimensional surface, whereby working areas (10) are defined on the surface (1) and such a working area (10) is determined by the focal area (11) of the removal agent,
**characterised in that** the surface (1) is approximated by superimposed polygon networks (18), whereby each polygon (19) of the polygon network (18) is associated with the working area (10) of the removal agent (9).

2. A process according to Claim 1,
**characterised in that** the surface structure (2) is described by at least one grey level bit map (14).

3. A process according to Claim 2,
**characterised in that** the grey level bit map (14) comprises image points of different grey levels (12) or different colour levels.

4. A process according to Claim 3,
**characterised in that** the brightness of the grey level (12) corresponding to each image point of the grey level map (14) or the intensity of the colour level determines the depth of the removal of material.

5. A process according to Claim 4,
**characterised in that** the removal of material is carried out in the number of layers (7) that corresponds to the value of the grey level (12).

6. A process according to Claim 1,
**characterised in that** each layer (7) is assigned its own polygon network (18).

7. A process according to Claim 6,
**characterised in that** the polygon of each layer (7) to be worked (19) in each case does not have any border portion in common with one of the previously worked polygons.

8. A process for the multi-layered removal of material from a three-dimensional surface of any shape according to Claim 1,
whereby an original, three-dimensional computer model (16) of the workpiece (15) is produced, which is described by an original polygon network (17),
whereby two-dimensional points in one or more master texture bit maps (3) correspond to the three-dimensional corners of the polygons of the original polygon network (17),
whereby the polygons are transferred into the two-dimensional space of the master texture bit map (3) area,
whereby the grey level value (5) of a image point (4) of the master texture bit map (3) corresponds to the required removal of material at the workpiece (15) and the working areas (10) comprise individual layers (7),
whereby the sum of the working areas (10) produces the surface (1) and the sum of the layers (7) produces the surface structure (2) of the workpiece (15), and each layer (7) can be described by a polygon network (18), and the surface structure (2) of the workpiece (15) is approximated by superimposed, mutually offset polygon networks (18),
whereby a grey level bit map (14) from a parallel projection of the master texture bit map (3) onto the polygon (19) inside the working area (10) is assigned to each polygon (19) of the polygon network (18) inside the working area (10) so that the removal of material can be performed by the removal agent (9) in each layer (7) corresponding to the values of the grey level bit map (14).

9. A process according to Claim 8,
**characterised in that** the original model is derived from the description of the workpiece by CAD (spline) surfaces, which result in the original polygon network (17).

10. A process according to Claim 8,
**characterised in that** the brightness values of the grey levels (12) of the grey level bitmaps (14) either before or during the working of the surface (1) of the workpiece (15) are computed back to the master texture bitmap (3).

## Revendications

1. Procédé d'enlèvement de matière multicouche d'une pièce à usiner (15) ayant une surface tridimensionnelle (1) de forme quelconque par un moyen d'enlèvement (9) qui agit ponctuellement sur une surface, tel qu'un laser, et par lequel on produit une structure de surface (2) sur la surface tridimensionnelle (1),
des zones d'usinage (10) sont définies sur la surface (1), et une telle zone d'usinage (10) est déterminée par la zone de focalisation (11) du moyen d'enlèvement,
**caractérisé en ce que**
la surface (1) est déterminée approximativement par des réseaux de polygones superposés (18), chaque polygone (19) d'un réseau de polygones (18) étant associé à la zone d'usinage (10) du moyen d'enlèvement (9).

2. Procédé selon la revendication 1,
**caractérisé en ce que**
la structure de surface (2) est décrite par au moins un matriciel de niveaux de gris (14).

3. Procédé selon la revendication 2,
**caractérisé en ce que**
le matriciel de niveaux de gris (14) comprend des pixels de différents niveaux de gris (12) ou de différentes teintes.

4. Procédé selon la revendication 3,
**caractérisé en ce que**
chaque pixel du matriciel de niveaux de gris (14) détermine la brillance du niveau de gris (12) ou l'intensité de la teinte détermine la profondeur de l'enlèvement de matière.

5. Procédé selon la revendication 4,
**caractérisé en ce que**
l'enlèvement de matière s'effectue dans le nombre de couches (7) correspondant à la valeur du niveau de gris (12).

6. Procédé selon la revendication 1,
**caractérisé en ce qu'**
à chaque couche (7) est associé un réseau de polygones (18).

7. Procédé selon la revendication 6,
**caractérisé en ce que**
le polygone (19) respectif à usiner de chaque couche (7) n'a en commun aucune section de bord avec l'un des polygones préalablement usinés.

8. Procédé d'enlèvement de matière multicouche d'une surface tridimensionnelle de forme quelconque selon la revendication 1, selon lequel on produit un modèle informatique tridimensionnel initial (16) de la pièce à usiner (15), décrit par un réseau de polygones initial (17),
des points bidimensionnels dans un ou plusieurs matriciels de texture originels (3) correspondent aux coins bidimensionnels des polygones du réseau de polygones initial (17),
les polygones sont transférés dans l'espace bidimensionnel du matriciel de texture originel (3),
la valeur de niveau de gris (5) d'un pixel (4) du matriciel de texture originel (3) correspond à l'enlèvement de matière nécessaire sur la pièce à usiner (15) et les zones d'usinage (10) comprennent des couches individuelles (7),
la somme des zones d'usinage (10) produisent la surface (1) et la somme des couches (7) produisent la structure de surface (2) de la pièce à usiner (15), et chaque couche (7) peut être décrite par un réseau de polygones (18), et la structure de surface (2) de la pièce à usiner (15) est déterminée approximativement par des réseaux de polygones (18) superposés, disposés de façon décalée les uns par rapport aux autres,
un matriciel de niveaux de gris (14), résultant d'une projection parallèle du matriciel de texture originel (3) sur le polygone (19) à l'intérieur de la zone d'usinage (10), est associé à chaque polygone (19) du réseau de polygones (18) à l'intérieur de la zone d'usinage (10), de telle sorte que l'enlèvement de matière peut être effectué par le moyen d'enlèvement (9) dans chaque couche (7) en fonction des valeurs du matriciel de niveaux de gris (14).

9. Procédé selon la revendication 8,
**caractérisé en ce que**
le modèle initial est dérivé de la description de la .pièce à usiner par des surfaces CAD (Spline) qui forment le réseau de polygones initial (17).

10. Procédé selon la revendication 8,
**caractérisé en ce que**
les valeurs de brillance des niveaux de gris (12) du matriciel des niveaux de gris (14) sont calculées avant ou pendant l'usinage de la surface (1) de la pièce à usiner (15) en fonction du matriciel de texture originel (3).
